(19) Europäisches Patentamt
European Patent Office
Office européen des brevets

(11) **EP 4 300 380 A1**

(12) **EUROPEAN PATENT APPLICATION**

(43) Date of publication:
**03.01.2024 Bulletin 2024/01**

(21) Application number: **23158815.3**

(22) Date of filing: **27.02.2023**

(51) International Patent Classification (IPC):
***G06N 10/60*** *(2022.01)*

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.07.2022 JP 2022106775**

(71) Applicant: **Kabushiki Kaisha Toshiba**
**Minato-ku**
**Tokyo 105-0023 (JP)**

(72) Inventors:
• **HAMAKAWA, Yohei**
**Tokyo, 105-0023 (JP)**
• **HIDAKA, Ryo**
**Tokyo, 105-0023 (JP)**
• **TATSUMURA, Kosuke**
**Tokyo, 105-0023 (JP)**

(74) Representative: **Marks & Clerk LLP**
**15 Fetter Lane**
**London EC4A 1BW (GB)**

(54) **INFORMATION PROCESSING SYSTEM**

(57) An information processing system (10) according to one embodiment includes an Ising machine (12) and a host apparatus (14). A coefficient memory (52) of the Ising machine (12) stores a coefficient matrix and a coefficient vector defining an Ising model. A variable memory (54) of the Ising machine (12) stores a main variable and an auxiliary variable corresponding to each of Ising spins contained in the Ising model. An arithmetic circuit (58) of the Ising machine (12) alternately repeats, in a search process, execution of an auxiliary variable update process updating the auxiliary variable with the main variable and a main variable update process updating the main variable with the auxiliary variable, for each of the Ising spins. The coefficient memory (52) continues storing a preceding coefficient matrix and a preceding coefficient vector until the setting circuit writes a new coefficient matrix and a new coefficient vector.

FIG.1

10

EP 4 300 380 A1

**Description**

FIELD

Embodiments described herein relate generally to information processing systems.

BACKGROUND

Optimization of complex systems in various application fields, such as finance, logistics, control, and chemistry, often results in mathematical combinatorial optimization problems. The combinatorial optimization problem is a problem of finding a combination of discrete values, which minimizes a function of discrete variables, called a cost function.

A special purpose device that performs a process to search for a ground state of an Ising model, called an Ising machine, has recently been attracting attention. The problem of searching for a ground state of an Ising model is called an Ising problem.

The Ising problem is a combinatorial optimization problem of minimizing a cost function given by a quadratic function of binary variables (Ising spins). The cost function is called Ising energy.

A large number of practical combinatorial optimization problems can be converted into the Ising problem. Thus, a system solving a combinatorial optimization problem can solve a desired combinatorial optimization problem by using an Ising machine.

A system solving a combinatorial optimization problem includes an Ising machine that performs a process to search for a ground state of an Ising model and a host apparatus that performs processes other than the search process. The Ising model is defined by a coefficient matrix (coupling coefficient group, J matrix) and a coefficient vector (external magnetic field coefficient group, h vector).

In such a system solving a combinatorial optimization problem, the host apparatus transmits the coefficient matrix and coefficient vector to the Ising machine and receives a value of each of optimized Ising spins from the Ising machine. The Ising machine receives the coefficient matrix and coefficient vector from the host apparatus and returns the value of each of the Ising spins optimized to minimize Ising energy.

Such a system solving a combinatorial optimization problem transmits the coefficient matrix and coefficient vector having a large volume of data from the host apparatus to the Ising machine. This causes the system to have long time to transfer the coefficient matrix and coefficient vector, reducing the overall throughput of the system.

A problem to be solved by the present invention is to efficiently output a solution of a combinatorial optimization problem in a short time.

BRIEF DESCRIPTION OF THE DRAWINGS

FIG. 1 is a functional configuration diagram of an information processing system according to a first embodiment;
FIG. 2 is a diagram illustrating a graph depicting an Ising model;
FIG. 3 is a diagram illustrating variables stored in an Ising machine;
FIG. 4 is a flowchart illustrating a flow of a search process at the Ising machine;
FIG. 5 is a diagram illustrating a hardware configuration of a host apparatus together with the Ising machine;
FIG. 6 is a diagram illustrating a configuration of the Ising machine together with the host apparatus according to the first embodiment;
FIG. 7 is a sequence diagram illustrating a first example flow of processing in the first embodiment;
FIG. 8 is a timing diagram illustrating processing time when the processing is executed in accordance with the flow illustrated in FIG. 7;
FIG. 9 is a sequence diagram illustrating a second example flow of the processing in the first embodiment;
FIG. 10 is a sequence diagram illustrating a third example flow of the processing in the first embodiment;
FIG. 11 is a timing diagram illustrating processing time when the processing is executed in accordance with the flow illustrated in FIG. 10;
FIG. 12 is a diagram illustrating a functional configuration of a modification of the first embodiment;
FIG. 13 is a sequence diagram illustrating a flow of processing at an information processing system according to the modification;
FIG. 14 is a timing diagram illustrating processing time when the processing is executed in accordance with the flow illustrated in FIG. 13;
FIG. 15 is a sequence diagram illustrating a flow of processing at an information processing system according to a second embodiment;

FIG. 16 is a functional configuration diagram of an Ising machine and a host apparatus according to the second embodiment;

FIG. 17 is a sequence diagram illustrating a flow of processing at the information processing system according to the second embodiment;

FIG. 18 is a timing diagram illustrating processing time when the processing is executed in accordance with the flow illustrated in FIG. 17; and

FIG. 19 is a diagram illustrating example data to be transmitted.

DETAILED DESCRIPTION

According to one embodiment, an information processing system is a system for solving a combinatorial optimization problem. The information processing system includes an Ising machine a host apparatus. The Ising machine is hardware configured to execute a search process searching for a ground state of an Ising model representing the combinatorial optimization problem. The host apparatus is hardware connected to the Ising machine via an interface. The host apparatus is configured to control the Ising machine. The Ising machine includes a coefficient memory, a variable memory, an arithmetic circuit, an output circuit, and a setting circuit. The coefficient memory is configured to store a coefficient matrix and a coefficient vector defining the Ising model. The variable memory is configured to store a main variable and an auxiliary variable corresponding to each of Ising spins contained in the Ising model. The arithmetic circuit is configured to alternately repeat, in the search process, execution of an auxiliary variable update process and a main variable update process for each of the Ising spins. The auxiliary variable update process updates the auxiliary variable with the main variable. The main variable update process updates the main variable with the auxiliary variable. The output circuit is configured to transmit a value based on the main variable to the host apparatus as a search result. The main variable corresponds to each of the Ising spins after execution of the search process. The setting circuit is configured to write the coefficient matrix and the coefficient vector on the coefficient memory, and cause the arithmetic circuit to start the search process in response to reception of an execution start command of the search process from the host apparatus. The host apparatus is configured to receive the search result from the Ising machine after the search process and output a solution of the combinatorial optimization problem on the basis of the received search result. The coefficient memory is configured to continue storing a preceding coefficient matrix and a preceding coefficient vector until a new coefficient matrix and a new coefficient vector are written by the setting circuit.

First Embodiment

An information processing system 10 of a first embodiment will be described.

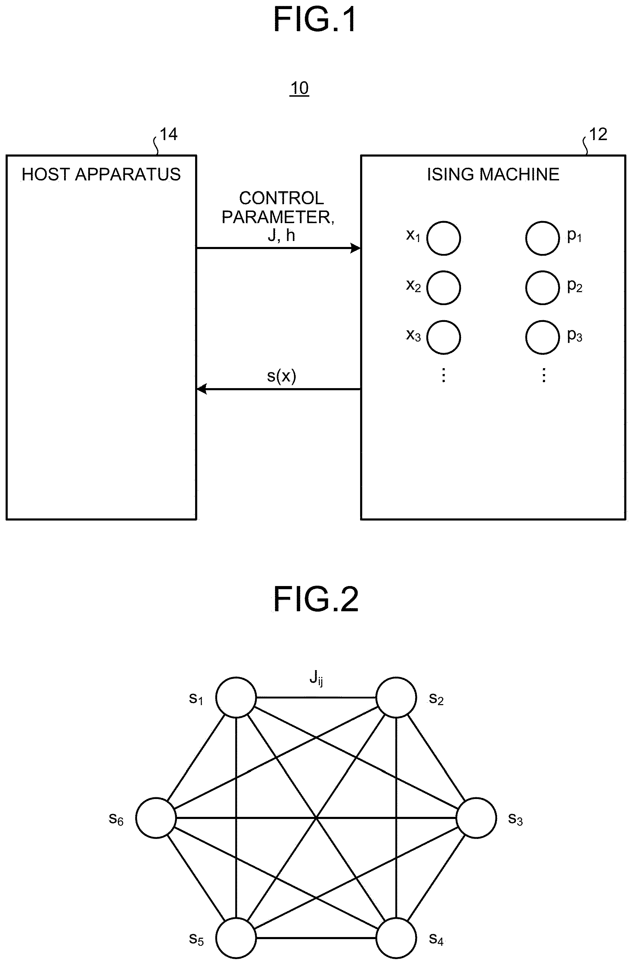

FIG. 1 is a diagram illustrating a functional configuration of the information processing system 10 according to the first embodiment.

The information processing system 10 solves a combinatorial optimization problem. The information processing system 10 of the first embodiment includes an Ising machine 12 and a host apparatus 14.

The Ising machine 12 is hardware executing a search process searching for a ground state of an Ising model that represents the combinatorial optimization problem. The Ising machine 12 is, for example, a reconfigurable semiconductor device, such as a field programmable gate array (FPGA). Note that the Ising machine 12 may be a semiconductor device that is not reconfigurable or a processing circuit that executes information processing in accordance with a computer program.

The host apparatus 14 is hardware connected to the Ising machine 12 via a physical interface and controlling the Ising machine 12. The host apparatus 14 is a processing circuit executing information processing in accordance with a computer program. The host apparatus 14 executes processes other than the search process executed by the Ising machine 12, in a series of processes for solving the combinatorial optimization problem.

When a ground state of the Ising model representing the combinatorial optimization problem to be solved is searched for, the host apparatus 14 transmits a coefficient matrix and a coefficient vector being definition information defining the Ising model and a control parameter for controlling the search process executed by the Ising machine 12, to the Ising machine 12 via the interface.

The Ising machine 12 executes the search process searching for a ground state of the Ising model defined by the coefficient matrix and coefficient vector. At the start of the search process, the Ising machine 12 sets each of a set of main variables ($x_1$, $x_2$, $x_3$, ...) and a set of auxiliary variables ($p_1$, $p_2$, $p_3$, ...) as a set of initial values. The Ising machine 12 then sets each of the main variables ($x_1$, $x_2$, $x_3$, ...) and each of the auxiliary variables ($p_1$, $p_2$, $p_3$, ...) at the initial value and subsequently starts the search process.

The Ising machine 12 can calculate the main variables ($x_1$, $x_2$, $x_3$, ...) with which Ising energy in the Ising model is minimized, by executing the search process. The Ising machine 12 then transmits Ising spins ($s_1$, $s_2$, $s_3$, ...) being binarized main variables ($x_1$, $x_2$, $x_3$, ...) after the search process as a search result to the host apparatus 14 via the interface. The Ising machine 12 may transmit the main variables ($x_1$, $x_2$, $x_3$, ...) after the search process as a search result to the host apparatus 14. In this case, the host apparatus 14 binarizes each of the main variables ($x_1$, $x_2$, $x_3$, ...) to calculate the Ising spins ($s_1$, $s_2$, $s_3$, ...). The host apparatus 14 then outputs the Ising spins ($s_1$, $s_2$, $s_3$, ...) as a solution of the combinatorial optimization problem.

In this embodiment, the Ising machine 12 executes, multiple times, the search process on a first Ising model defined by a first coefficient matrix being one of coefficient matrices and a first coefficient vector being one of coefficient vectors. When executing the search process on the first Ising model multiple times, the Ising machine 12 sets at least one of the set of the main variables ($x_1$, $x_2$, $x_3$, ...) and the set of the auxiliary variables ($p_1$, $p_2$, $p_3$, ...) for the first Ising model as a set of the initial values different between the multiple times of the search process prior to the start of execution of each of the multiple times of the search process. For example, when executing the search process on the first Ising model multiple times, the Ising machine 12 sets at least one of the set of the main variables ($x_1$, $x_2$, $x_3$, ...) and the set of the auxiliary variables ($p_1$, $p_2$, $p_3$, ...) as a set of initial values based on random numbers for each of the multiple times of the search process before the start of execution of each of the multiple times of the search process. For example, the Ising machine 12 may set one of the set of the main variables ($x_1$, $x_2$, $x_3$, ...) and the set of the auxiliary variables ($p_1$, $p_2$, $p_3$, ...) as a set of initial values generated on the basis of random numbers or the like and set the other as a set of predetermined values, such as 0.

The Ising machine 12 may output an approximate solution instead of an exact solution as a search result by executing the search process in some cases. Thus, the Ising machine 12 changes the initial values of at least one of the set of the main variables ($x_1$, $x_2$, $x_3$, ...) and the set of the auxiliary variables ($p_1$, $p_2$, $p_3$, ...) for an Ising model defined by the same coefficient matrix and coefficient vector and executes the search process multiple times, thereby enabling calculation of different approximate solutions. Hence, the information processing system 10 can select the best approximate solution from the approximate solutions calculated by the Ising machine 12 to output a better solution or can output the approximate solutions calculated by the Ising machine 12 as they are. With this, for example, in the traveling salesman problem that the shortest route is calculated among routes to visit each of cities only once, the information processing system 10 can execute the search process multiple times with only the initial state varied for yielding the best possible solution. The information processing system 10 can also obtain different pieces of sample data from the same model in the same way as, for example, sampling in machine learning.

FIG. 2 is a diagram illustrating a graph depicting the Ising model. Energy (E(s)) of the Ising model containing N Ising spins is expressed by Equation (1) below.

$$E(s) = -\frac{1}{2}\sum_{i=1}^{N}\sum_{j=1}^{N}J_{i,j}s_i s_j + \sum_{i=1}^{N}h_i s_i \qquad \cdots (1)$$

N is the number of the Ising spins contained in the Ising model and is an integer of 3 or greater. Symbols i and j denote the indices of the Ising spins and are integers from 1 through N, both inclusive. Symbol $s_i$ denotes the ith Ising spin. Symbol $s_j$ denotes the jth Ising spin. Symbols $s_i$ and $s_j$ represent either -1 or +1. Note that the N Ising spins may be collectively called an s vector ($s_1$, $s_2$, ..., $s_N$). The s vector represents the -1 or +1 configuration of the N Ising spins.

$J_{ij}$ is the element in the row i and the column j in the coefficient matrix. The coefficient matrix is a square matrix having N rows and N columns in which the symmetrical components have the same element ($J_{ij} = J_{ji}$). In the Ising model, a coupling coefficient is defined for every pair of two Ising spins in the N Ising spins. $J_{ij}$ denotes the coupling coefficient indicating interaction between the ith Ising spin and the jth Ising spin.

Symbol hi is the ith element in the coefficient vector. In the Ising model, an external magnetic field coefficient indicating an external magnetic field having effect separately is defined for each of the N Ising spins. Symbol hi denotes the external magnetic field coefficient having effect on the ith Ising spin.

The Ising problem of N size indicates a problem of calculating a spin configuration minimizing Ising energy for an Ising model containing N Ising spins. The spin configuration (s vector) having minimum energy is called a ground state.

FIG. 2 is a graph depicting an Ising model for N = 6. The graph vertices correspond to Ising spins. The graph edges correspond to the coupling coefficients $J_{ij}$ between the Ising spins. The external magnetic field coefficients hi are allocated to the graph vertices.

The combinatorial optimization problem is typically represented as an Ising problem defined by a coefficient matrix and a coefficient vector. The Ising machine 12 receives the coefficient matrix and coefficient vector as a problem to be solved, internally searches for a spin configuration with lower Ising energy, and outputs the optimized spin configuration as a solution.

A spin configuration with minimum Ising energy corresponds to an exact solution. A spin configuration with near-minimum Ising energy corresponds to an approximate solution. Performance of the Ising machine 12 is typically indicated by time taken until a solution is output and accuracy of the solution (lower energy indicates higher accuracy of the solution). The Ising machine 12 outputs not only an exact solution but also an approximate solution as a solution. Moreover, the search process searching for a ground state at the Ising machine 12 includes not only a process searching for an exact solution but also a process searching for an approximate solution.

The Ising machine 12 capable of solving an Ising problem of N size can also solve an Ising problem of a size smaller than N size. For example, the Ising machine 12 can set, at 0, the coupling coefficient and the external magnetic field coefficient of an element with no Ising spin in the coefficient matrix and an h matrix, thereby enabling search while regarding an Ising problem of a size smaller than N size as an Ising problem of N size.

As a method of solving an Ising problem, the simulated annealing (SA) method has conventionally been known. A device performing a process to search for a ground state of an Ising model in accordance with the SA method is called an SA-based Ising machine.

As a method of solving an Ising problem, the simulated bifurcation (SB) method is also known. The Ising machine 12 of this embodiment performs the process to search for a ground state of an Ising model by the simulated bifurcation method. For example, the simulated bifurcation method is proposed in Hayato Goto, Kosuke Tatsumura, Alexander R. Dixon, "Combinatorial optimization by simulating adiabatic bifurcations in nonlinear Hamiltonian systems", Science Advances, Vol. 5, no. 4, eaav2372, 19 Apr. 2019. The simulated bifurcation method is an algorithm in which the equation of motion in an optimization algorithm based on adiabatic change in classical mechanics is modified into a form suitable for high-speed simulation.

The simulated bifurcation method uses two variables: a main variable ($x_i$) and an auxiliary variable ($p_i$); both corresponding to each of N virtual particles. The N particles correspond to the respective N Ising spins. In the simulated bifurcation method, the main variable ($x_i$) indicates the position of the ith particle among the N particles (i = 1, 2, ..., N). In the simulated bifurcation method, the auxiliary variable ($p_i$) indicates the momentum of the ith particle. Each of the N main variables ($x_i$) and each of the N auxiliary variables ($p_i$) are continuous variables represented by real numbers.

In the simulated bifurcation method, for each of the N virtual particles, for example, simultaneous ordinary differential equations of Equations (2) and (3) below are numerically solved.

$$\frac{dx_i}{dt} = \frac{\partial H}{\partial p_i} = Dp_i \qquad \cdots (2)$$

$$\frac{dp_i}{dt} = -\frac{\partial H}{\partial x_i} = \left\{ -D + p(t) - Kx_i^2 \right\} x_i - ch_i\alpha(t) + c\sum_{j=1}^{N} J_{i,j}x_j \qquad \cdots (3)$$

Here, H is the Hamiltonian of Equation (4) below.

$$H = \sum_{i=1}^{N} \left[ \frac{D}{2}\left(x_i^2 + p_i^2\right) - \frac{p(t)}{2}x_i^2 + \frac{K}{4}x_i^4 + ch_ix_i\alpha(t) - \frac{c}{2}\sum_{j=1}^{N} J_{i,j}x_ix_j \right] \qquad \cdots (4)$$

Symbol c is a predetermined coefficient. D is a predetermined coefficient and corresponds to detuning. K is a coefficient corresponding to a positive Kerr coefficient. Symbol t is a variable representing time. Symbol p(t) corresponds to pumping amplitude and is a function monotonically increasing a value in accordance with the number of times of update at the time of calculation in the simulated bifurcation method. The initial value of p(t) may be set at 0. Symbol $\alpha(t)$ is a function monotonically increasing with p(t).

Here, by using the symplectic Euler method, differential equations given by Equations (2) and (3) can be solved. As expressed by Equations (5) and (6) below, when the symplectic Euler method is used, the differential equations are rewritten as discrete recurrence relations.

$$x_i = x_i + Dp_i\Delta t \qquad \cdots (5)$$

$$p_i = p_i + \left\{ \left[ -D + p(t) - Kx_i^2 \right] x_i - ch_i\alpha(t) + c\sum_{j=1}^{N} J_{ij}x_j \right\}\Delta t \qquad \cdots (6)$$

Symbol $\Delta t$ is a time step (unit time, time increment width).

The Ising machine 12 alternately performs computation of Equations (5) and (6) while increasing t by $\Delta t$ until t reaches predetermined end time (T). Then, the Ising machine 12 outputs values of the N Ising spins (si) each being one of finally obtained N main variables ($x_i$) that are binarized or values of the N main variables ($x_i$), as a search result.

Note that the Ising machine 12 may execute an algorithm performing computation other than Equations (3) and (4) as long as the algorithm uses the simulated bifurcation method. For example, the Ising machine 12 may execute an algorithm computing modified equations of Equations (3) and (4). Alternatively, for example, the Ising machine 12 may execute an algorithm performing predetermined control processing in addition to computation of Equations (3) and (4) or computation of modified equations of Equations (3) and (4).

The Ising machine 12 changes an algorithm to be executed, which may vary performance indicators, such as convergence speed and accuracy of a solution reached. Thus, the algorithm applied to the Ising machine 12 may differ depending on the Ising problem to be solved and the objective (attaching importance to convergence speed, accuracy, and the like). The Ising machine 12 may execute the search process through an algorithm selected by a user from preset algorithms.

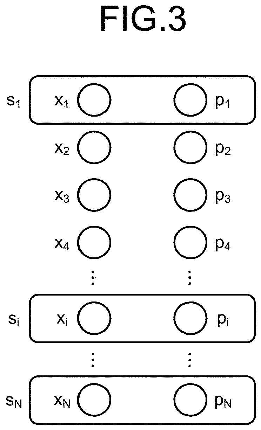

FIG. 3 is a diagram illustrating variables stored in the Ising machine 12. The Ising machine 12 executes an algorithm using the simulated bifurcation method by a hardware circuit. When performing the process to search for a ground state of the Ising model containing N Ising spins, the Ising machine 12 stores N main variables ($x_i$) and N auxiliary variables (pi) in an internal memory.

In this way, the Ising machine 12 stores $2 \times N$ variables therein. Thus, the Ising machine 12 has a configuration differing from that of an SA-based Ising machine storing N variables therein. Note that the main variables ($x_i$) are converted into Ising spins (si) through binarization processing. In contrast, the auxiliary variables (pi) are not used for conversion into Ising spins (si).

Each of the N main variables ($x_i$) and each of the N auxiliary variables (pi) are initialized at the start of the search process. Even for problems with the same coefficient matrix and coefficient vector, if the N main variables ($x_i$) and the N auxiliary variables (pi) have different initial values, the Ising machine 12 may output different solutions (approximate solutions). Thus, the Ising machine 12 changes the initial values of the N main variables ($x_i$) and the N auxiliary variables (pi) and executes multiple times the search process for the problems with the same coefficient matrix and coefficient vector, thereby enabling acquisition of a more accurate solution.

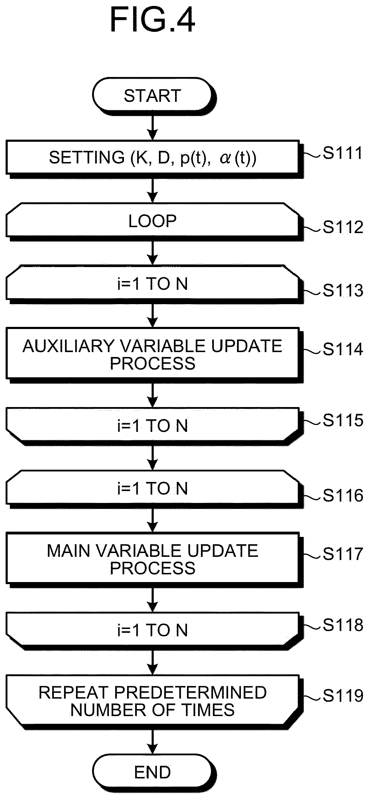

FIG. 4 is a flowchart illustrating a flow of the search process at the Ising machine 12. The Ising machine 12 executes the search process in accordance with the flow illustrated in FIG. 4.

First, at S111, the Ising machine 12 sets coefficients of K and D, functions of p(t), $\alpha$(t), and the like, the number of repetitions, and the like. Then, the Ising machine 12 repeats a loop process from S112 to S119 in the search process the set number of times.

At S113 to S115 in the loop, the Ising machine 12 executes an auxiliary variable update process while incrementing i by 1 from i = 1 to i = N (S113, S114, S115). At the auxiliary variable update process for updating the ith auxiliary variable (S114), the Ising machine 12 updates the ith auxiliary variable (pi) with N main variables ($x_1$ to $x_N$), N coupling coefficients ($J_{i,j}$) indicating interaction between the ith main variable ($x_i$) and the other (N - 1) main variables ($x_{1 \text{ to } i-1}$, $x_{i+1 \text{ to } N}$), and the ith external magnetic field coefficient ($h_j$).

In specific, the Ising machine 12 computes Equation (6) above to calculate the ith auxiliary variable ($p_i$).

Note that the Ising machine 12 may execute the process at S114 in parallel. This enables the Ising machine 12 to calculate N auxiliary variables ($p_1$ to $p_N$) at high speed.

Then, at S116 to S118, the Ising machine 12 executes a main variable update process while incrementing i by 1 from i = 1 to i = N (S116, S117, S118). At the main variable update process for updating the ith main variable (S117), the Ising machine 12 updates the ith main variable ($x_i$) with the ith auxiliary variable ($p_i$).

In specific, the Ising machine 12 computes Equation (5) above to calculate the ith main variable ($x_i$).

Note that the Ising machine 12 may execute the process at S117 in parallel. This enables the Ising machine 12 to calculate N main variables ($x_1$ to $x_N$) at high speed.

Then, when the Ising machine 12 executes the loop process from S112 to S119 the set number of times, this flow ends. Note that the Ising machine 12 may execute the process from S116 to S118 first and then the process from S113 to S115 in the loop process from S112 to S119.

As described above, the Ising machine 12 alternately repeats, multiple times, the execution of the auxiliary variable update process (5114) updating the auxiliary variable with the main variable and the main variable update process (S 117) updating the main variable with the auxiliary variable for each of the N Ising spins ($s_1$ to $s_N$). Moreover, the Ising machine 12 outputs a value based on the main variable after the auxiliary variable update process (S 1 14) and the main variable update process (S 1 17) are alternately executed multiple times, as a search result. This enables the Ising machine 12 to execute the algorithm using the simulated bifurcation method to execute the process to search for a ground state of the Ising model.

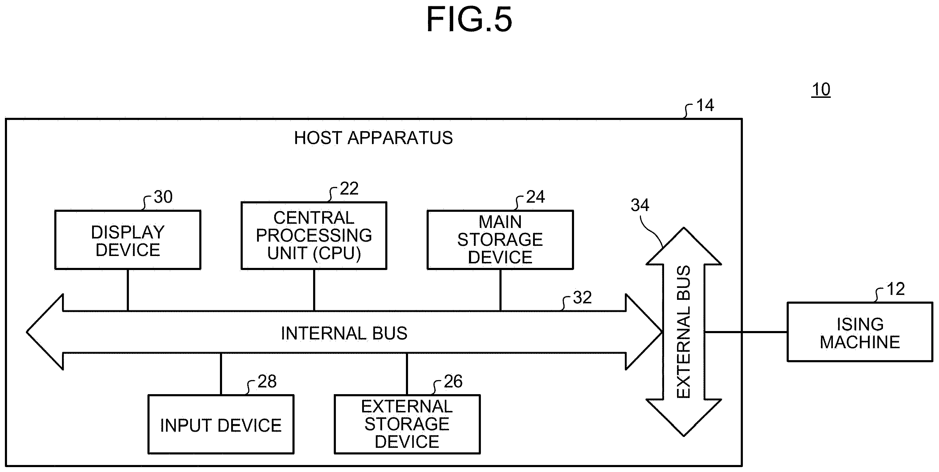

FIG. 5 is a diagram illustrating an example hardware configuration of the host apparatus 14 together with the Ising machine 12. For example, the host apparatus 14 includes a central processing unit 22 (CPU), a main storage device 24, an external storage device 26, an input device 28, a display device 30, an internal bus 32, and an external bus 34.

The central processing unit 22 operates in accordance with a computer program stored in the main storage device 24. The central processing unit 22 generates the definition information and the control parameter. Moreover, the central processing unit 22 transmits the definition information and the control parameter via the internal bus 32 and the external bus 34 to the Ising machine 12. The central processing unit 22 receives the search result from the Ising machine 12 via the external bus 34 and the internal bus 32 and outputs a solution of the combinatorial optimization problem on the basis of the received search result.

The main storage device 24 is a random access memory (RAM). The main storage device 24 is used as a work area for data processing at the central processing unit 22.

The external storage device 26 is a nonvolatile storage device. The external storage device 26 is, for example, a hard disk drive (HDD) or a solid state drive (SSD). The external storage device 26 stores the computer program executed by the central processing unit 22. The central processing unit 22 expands and executes the computer program stored in the external storage device 26 on the main storage device 24.

The input device 28 is a device for inputting a user instruction and the like. The input device 28 is, for example, a mouse and a keyboard. The input device 28 receives a process start instruction from a user. When the input device 28 receives the start instruction from the user, the central processing unit 22 starts a solution calculation process for the combinatorial optimization problem.

The display device 30 is a device for displaying information to the user. The display device 30 displays the solution of the combinatorial optimization problem.

The internal bus 32 connects the central processing unit 22, the main storage device 24, the external storage device 26, the input device 28, and the display device 30 in order to exchange data between them. The external bus 34 functions as an interface connecting the Ising machine 12 to the host apparatus 14.

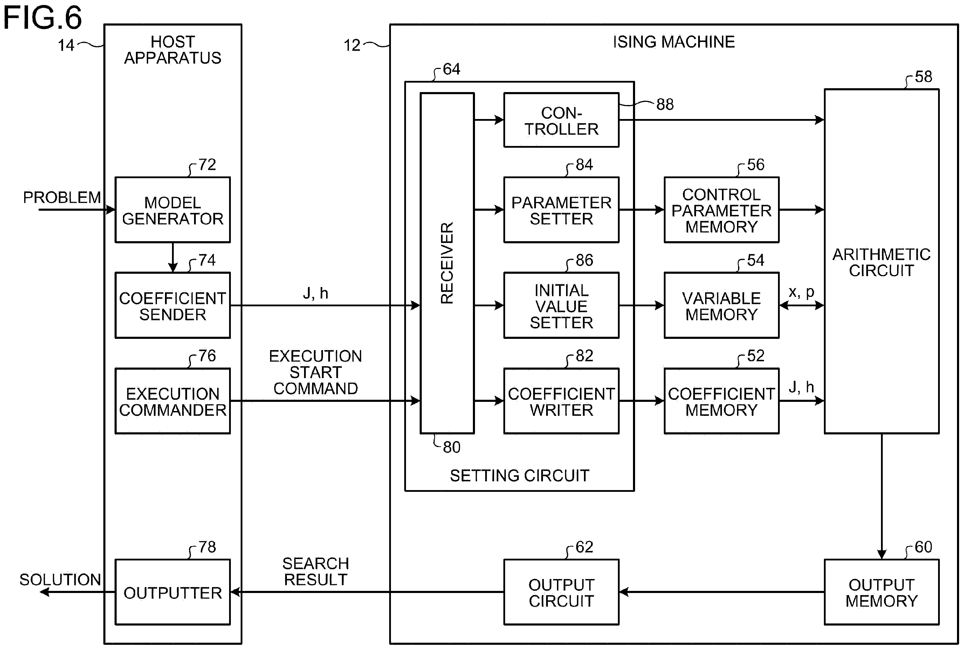

FIG. 6 is a diagram illustrating a functional configuration of the Ising machine 12 and the host apparatus 14 according to the first embodiment. The Ising machine 12 includes a coefficient memory 52, a variable memory 54, a control parameter memory 56, an arithmetic circuit 58, an output memory 60, an output circuit 62, and a setting circuit 64.

The coefficient memory 52 stores the coefficient matrix (coupling coefficient group, J matrix) and the coefficient vector (external magnetic field coefficient group, h vector) defining an Ising model to be searched. In this embodiment, the coefficient memory 52 stores a coefficient matrix containing $N \times N$ coefficients and a coefficient vector containing N coefficients.

The variable memory 54 stores the main variable and the auxiliary variable corresponding to each of the Ising spins ($s_1$, $s_2$, $s_3$, ...) contained in the Ising model. In this embodiment, the variable memory 54 stores a set of N main variables ($x_1$, $x_2$, $x_3$, ...) and a set of N auxiliary variables ($p_1$, $p_2$, $p_3$, ...).

The control parameter memory 56 stores the control parameter including setting values for executing the search process illustrated in FIG. 4. In specific, the control parameter includes the number of times of loops of the loop process in FIG. 4. In specific, the control parameter also includes constants and functions, such as K, D, $\Delta t$, p(t), and $\alpha(t)$, in Equations (5) and (6).

The arithmetic circuit 58 uses the control parameter stored in the control parameter memory 56 and the coefficient matrix and coefficient vector stored in the coefficient memory 52 to execute the search process illustrated in FIG. 4. In the search process, the arithmetic circuit 58 alternately repeats multiple times the execution of the auxiliary variable update process updating the auxiliary variable stored in the variable memory 54 with the main variable stored in the variable memory 54 and the main variable update process updating the main variable stored in the variable memory 54 with the auxiliary variable stored in the variable memory 54, for each of the Ising spins ($s_1$, $s_2$, $s_3$, ...). After the search process ends, the arithmetic circuit 58 writes the main variables ($x_1$, $x_2$, $x_3$, ...) on the output memory 60.

The output memory 60 stores the main variables ($x_1$, $x_2$, $x_3$, ...) calculated by executing the search process by the arithmetic circuit 58. In this embodiment, the output memory 60 stores N main variables ($x_1$, $x_2$, $x_3$, ...).

After the search process ends, the output circuit 62 calculates the Ising spins ($s_1$, $s_2$, $s_3$, ...) being the respective main variables ($x_1$, $x_2$, $x_3$, ...) binarized. After the arithmetic circuit 58 executes the search process, the output circuit 62 transmits the Ising spins ($s_1$, $s_2$, $s_3$, ...) to the host apparatus 14 as a search result. Note that, after the arithmetic circuit 58 executes the search process, the output circuit 62 may transmit the main variables ($x_1$, $x_2$, $x_3$, ...) instead of the Ising spins ($s_1$, $s_2$, $s_3$, ...) to the host apparatus 14 as a search result. That is, after the arithmetic circuit 58 executes the search process, the output circuit 62 transmits values based on the main variables corresponding to the respective Ising spins ($s_1$, $s_2$, $s_3$, ...), to the host apparatus 14 as a search result.

The host apparatus 14 includes a model generator 72, a coefficient sender 74, an execution commander 76, and an outputter 78, as functional constituents.

The model generator 72 receives a combinatorial optimization problem to be solved. Then, the model generator 72 generates a coefficient matrix and a coefficient vector defining an Ising model to be searched on the basis of the received combinatorial optimization problem. The coefficient sender 74 transmits the coefficient matrix and coefficient vector generated by the model generator 72 to the Ising machine 12. The execution commander 76 transmits an execution start command commanding the start of execution of the search process, to the Ising machine 12. The outputter 78 receives a search result from the Ising machine 12 after the search process and generates a solution of the combinatorial optimization problem on the basis of the received search result. Then, the outputter 78 outputs the solution of the combinatorial optimization problem.

The setting circuit 64 of the Ising machine 12 includes a processing circuit and a memory, and the processing circuit executes information processing in accordance with a computer program. For example, the processing circuit performing information processing in accordance with the computer program may be a hard-wired sequencer circuit. For example, the memory may be a register holding a parameter for control. The setting circuit 64 functions as a receiver 80, a coefficient writer 82, a parameter setter 84, an initial value setter 86, and a controller 88 by performing the information processing in accordance with the computer program.

The receiver 80 receives the coefficient matrix and coefficient vector from the host apparatus 14. The receiver 80 also receives the execution start command from the host apparatus 14.

When the receiver 80 receives the coefficient matrix and coefficient vector, the coefficient writer 82 writes the received coefficient matrix and coefficient vector on the coefficient memory 52.

The parameter setter 84 writes the control parameter on the control parameter memory 56. The parameter setter 84 may receive the control parameter from the host apparatus 14 and write the control parameter on the control parameter memory 56, or may write a predetermined control parameter on the control parameter memory 56.

The initial value setter 86 sets an initial value of each of the main variables ($x_1$, $x_2$, $x_3$, ...) and each of the auxiliary variables ($p_1$, $p_2$, $p_3$, ...) stored in the variable memory 54.

When the receiver 80 receives the execution start command from the host apparatus 14, the controller 88 causes the arithmetic circuit 58 to execute the search process.

Here, the controller 88 causes the arithmetic circuit 58 to execute, multiple times, the search process on the first Ising model being an Ising model generated on the basis of the combinatorial optimization problem. In this case, the host apparatus 14 transmits once the coefficient matrix and coefficient vector defining the first Ising model to the Ising machine 12 prior to execution of the multiple times of the search process. The receiver 80 receives once the coefficient matrix and coefficient vector defining the first Ising model from the host apparatus 14 prior to execution of the multiple times of the search process on the first Ising model. Then, the coefficient writer 82 writes the received coefficient matrix and coefficient vector on the coefficient memory 52 prior to execution of the multiple times of the search process on the first Ising model, and does not update the coefficient matrix and coefficient vector written on the coefficient memory 52 until the multiple times of the search process ends. This allows the coefficient memory 52 to continue storing the preceding coefficient matrix and coefficient vector until the setting circuit 64 writes a new coefficient matrix and coefficient vector.

In the Ising model, the coefficient matrix (J) has a significantly large volume of data being a data volume per $N^2 \times$ element. Thus, if the information processing system 10 transmits the coefficient matrix from the host apparatus 14 to the Ising machine 12 many times to solve a combinatorial optimization problem, the communication time causes an increase in the overall processing time of the system. However, this information processing system 10 executes the search process multiple times while transmitting once the coefficient matrix and coefficient vector. Thus, the information processing system 10 can shorten the time to transfer the coefficient matrix and coefficient vector, thereby improving the overall throughput of the system.

Moreover, the initial value setter 86 sets at least one of the set of the main variables ($x_1$, $x_2$, $x_3$, ...) and the set of the auxiliary variables ($p_1$, $p_2$, $p_3$, ...) for the Ising spins as a set of the initial values different between the multiple times of the search process before the start of execution of each of the multiple times of the search process on the first Ising model. For example, the initial value setter 86 stores an initial value table in which patterns of a set of the initial values for at least one of the set of the main variables and the set of the auxiliary variable are written. In this case, the initial value setter 86 sets at least one of the set of the main variables and the set of the auxiliary variables for the Ising spins as a set of the initial values based on any of the patterns written in the initial value table before the start of execution of each of the multiple times of the search process. For example, the initial value setter 86 sets at least one of the set of the main variables ($x_1$, $x_2$, $x_3$, ...) and the set of the auxiliary variables ($p_1$, $p_2$, $p_3$, ...) as a set of initial values based on random numbers for each of the plural time of the search process before the start of execution of each of the multiple times of the search process.

Moreover, when the search process is executed multiple times, the output circuit 62 transmits the search result to the host apparatus 14 at each execution of the search process. Instead of this, the output circuit 62 may collectively transmit, to the host apparatus 14, the search results obtained by executing the search process multiple times.

This information processing system 10 can obtain different approximate solutions as results of the multiple times of the search process on the first Ising model. This enables the information processing system 10 to output a more accurate solution and to output multiple solutions.

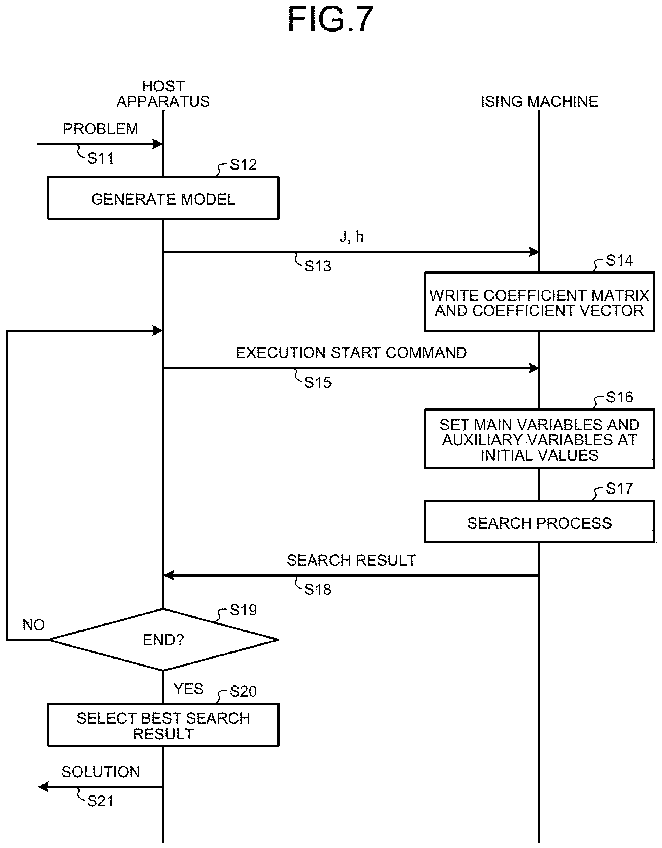

FIG. 7 is a sequence diagram illustrating a first example flow of processing at the information processing system 10 according to the first embodiment. The information processing system 10 executes processing in accordance with the flow illustrated in FIG. 7, for example.

At S11, the host apparatus 14 acquires a combinatorial optimization problem input by a user or a combinatorial optimization problem received from another apparatus.

Then, at S12, the host apparatus 14 generates a first Ising model to be searched on the basis of the acquired combinatorial optimization problem. That is, the host apparatus 14 generates a coefficient matrix and a coefficient vector defining the first Ising model.

Then, at S13, the host apparatus 14 transmits the generated coefficient matrix and coefficient vector to the Ising machine 12. Then, at S14, the Ising machine 12 receives the coefficient matrix and coefficient vector from the host apparatus 14 and writes the received coefficient matrix and coefficient vector on the coefficient memory 52. Note that the coefficient memory 52 continues storing the coefficient matrix and coefficient vector written at the preceding time until a new coefficient matrix and coefficient vector are written.

Then, at S15, the host apparatus 14 transmits an execution start command to the Ising machine 12. Note that the host apparatus 14 may transmit the execution start command together with the coefficient matrix and coefficient vector at S13 to the Ising machine 12.

Then, at S16, the Ising machine 12 sets at least one of a set of N main variables ($x_1$, $x_2$, $x_3$, ...) and a set of N auxiliary variables ($p_1$, $p_2$, $p_3$, ...) as a set of N initial values in response to reception of the execution start command. The set of the N initial values differs depending on the search process. For example, the Ising machine 12 generates a set of N initial values on the basis of random numbers for each search process.

Then, at S 17, the Ising machine 12 executes the search process illustrated in FIG. 4.

If the search process ends, the Ising machine 12 transmits the search result to the host apparatus 14 at S 18.

Then, at S19, the host apparatus 14 determines whether an end condition is satisfied. For example, the host apparatus 14 may determine that the end condition is satisfied if the search results for a predetermined number of times of execution for the first Ising model are received. Alternatively, for example, the host apparatus 14 may determine that the end condition is satisfied if preset end time arrives or if a preset execution time period elapses after the execution start command is output.

If the end condition is not satisfied (No at S19), the host apparatus 14 returns the processing to S15 and transmits a subsequent execution start command to the Ising machine 12 to cause the Ising machine 12 to repeat the execution of the search process. If the end condition is satisfied (Yes at S19), the host apparatus 14 proceeds with the processing to S20.

At S20, the host apparatus 14 selects the best search result from the search results received for the first Ising machine. The host apparatus 14 may select a predetermined number of higher-ranked search results in addition to the best search result. Moreover, the host apparatus 14 may compare the received search result with the best search result in the past at each reception of the search result at S 18 and retain a better one as the best search result. This enables the host apparatus 14 to complete the process to select the best search result at earlier time than a case where the best search result is selected from the search results after receiving all the search results.

Then, at S21, the host apparatus 14 generates a solution of the combinatorial optimization problem on the basis of the selected best search result. The host apparatus 14 then outputs or transmits the generated solution to the user or the other apparatus.

The host apparatus 14 executing this processing in the first example transmits the execution start command commanding the search process on the first Ising model, to the Ising machine 12 multiple times. At each reception of the execution start command from the host apparatus 14, the Ising machine 12 causes the arithmetic circuit 58 to execute the search process on the first Ising model. In this case, the host apparatus 14 transmits the coefficient matrix and coefficient vector to the Ising machine 12 prior to the multiple times of the execution start command.

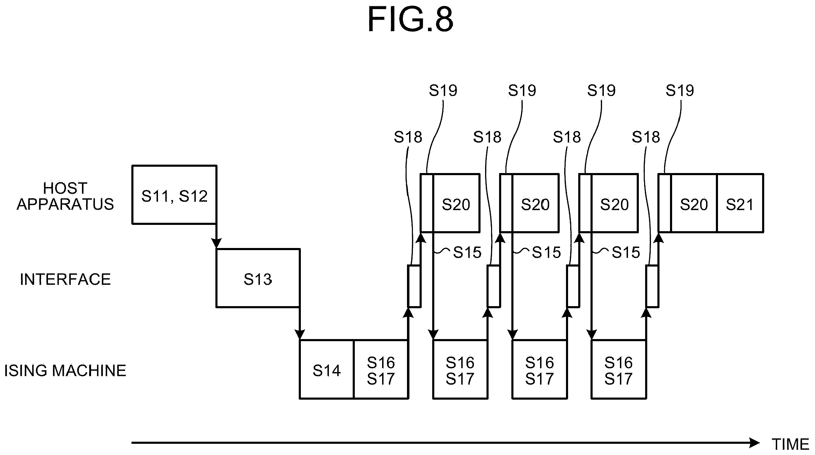

FIG. 8 is a timing diagram illustrating example processing time at each step when the processing is executed in accordance with the flow illustrated in FIG. 7.

When a combinatorial optimization problem of significantly large size is solved, the coefficient matrix and coefficient vector of large size lengthen the time for the process to transfer the coefficient matrix and coefficient vector at S13 and for the process to write the coefficient matrix and coefficient vector on the coefficient memory 52 at S 14. However, the information processing system 10 executing the processing in accordance with the flow illustrated in FIG. 7 executes the process to transfer the coefficient matrix and coefficient vector at S 13 and the process to write the coefficient matrix and coefficient vector on the coefficient memory 52 at S 14 only once even when the Ising machine 12 executes the search process on the first Ising model multiple times. Thus, the information processing system 10 executing the processing in accordance with the flow illustrated in FIG. 7 can improve the overall throughput of the system and shorten the time from acquisition of the combinatorial optimization problem until output of the solution.

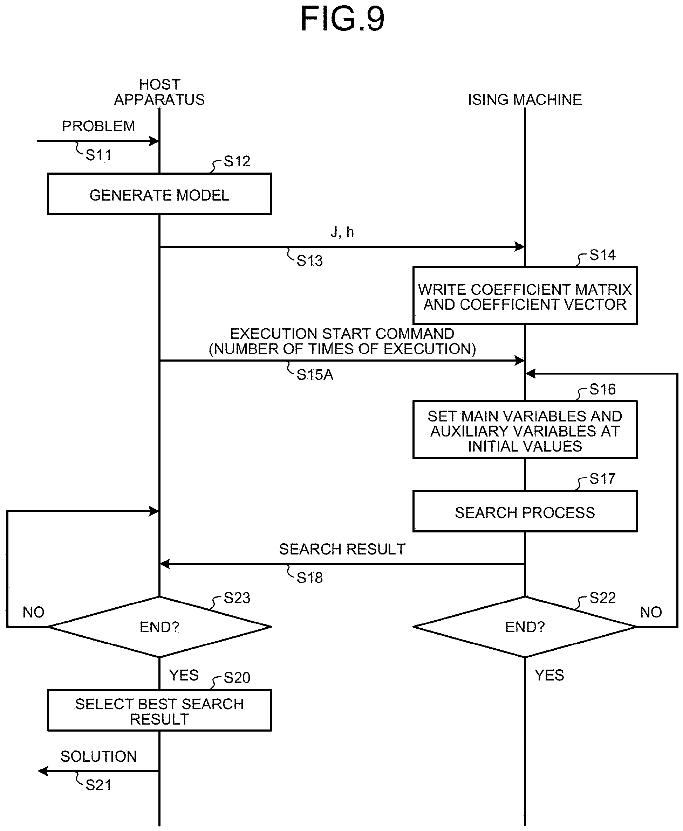

FIG. 9 is a sequence diagram illustrating a second example flow of the processing at the information processing system 10 according to the first embodiment. The information processing system 10 may execute the processing in accordance with the flow illustrated in FIG. 9, for example. Note that the processing flow illustrated in FIG. 9 is similar to the processing flow illustrated in FIG. 7. Thus, substantially the same processes are denoted by the same step numbers, and their detailed description is omitted.

The host apparatus 14 acquires a combinatorial optimization problem at S11, generates a coefficient matrix and a coefficient vector at S12, and transmits the coefficient matrix and coefficient vector to the Ising machine 12 at S13. Then, at S14, the Ising machine 12 writes the received coefficient matrix and coefficient vector on the coefficient memory 52.

Then, at S15A, the host apparatus 14 transmits an execution start command containing the number of times of execution to the Ising machine 12 once. At S15A, the host apparatus 14 may transmit an execution start command containing stop time or an execution time period instead of the execution start command containing the number of times of execution, to the Ising machine 12 once.

Subsequent to S15A, at S16, the Ising machine 12 sets at least one of a set of N main variables ($x_1$, $x_2$, $x_3$, ...) and a set of N auxiliary variables ($p_1$, $p_2$, $p_3$, ...) as a set of N initial values in response to reception of the execution start command.

Then, at S17, the Ising machine 12 executes the search process illustrated in FIG. 4. If the search process ends, the Ising machine 12 transmits the search result to the host apparatus 14 at S18.

Then, at S22, the Ising machine 12 determines whether an end condition is satisfied. In specific, the Ising machine 12 determines that the end condition is satisfied if the search results for the number of times of execution contained in the execution start command are transmitted to the host apparatus 14. Moreover, the Ising machine 12 determines that the end condition is satisfied if the stop time contained in the execution start command arrives. Moreover, the Ising machine 12 determines that the end condition is satisfied if the execution time period contained in the execution start command elapses after the execution start command is received.

If the end condition is not satisfied (No at S22), the Ising machine 12 returns the processing to S16 and executes a subsequent initial value setting process (S16) and search process (S17). If the end condition is satisfied (Yes at S22), the Ising machine 12 ends the processing.

Meanwhile, after transmitting the execution start command, the host apparatus 14 waits to receive the search result. If receiving the search result from the Ising machine 12, the host apparatus 14 proceeds with the processing to S23.

At S23, the host apparatus 14 determines whether an end condition is satisfied. In specific, the host apparatus 14 determines that the end condition is satisfied if the search results for the number of times of execution contained in the execution start command are received. Alternatively, the host apparatus 14 may determine that the end condition is satisfied if the stop time contained in the execution start command arrives. Alternatively, the host apparatus 14 may determine that the end condition is satisfied if the execution time period contained in the execution start command elapses after the execution start command is transmitted.

If the end condition is not satisfied (No at S23), the host apparatus 14 waits for the processing until a subsequent search result is received. If the end condition is satisfied (Yes at S23), the host apparatus 14 proceeds with the processing to S20.

At S20, the host apparatus 14 selects the best search result from the search results received for the first Ising machine. Then, at S21, the host apparatus 14 generates a solution of the combinatorial optimization problem on the basis of the selected best search result, and displays or transmits the generated solution to the user or the other apparatus.

The host apparatus 14 executing this processing in the second example transmits the execution start command commanding the search process on the first Ising model, to the Ising machine 12 once. When receiving the execution start command from the host apparatus 14, the Ising machine 12 causes the arithmetic circuit 58 to execute the search process multiple times on the first Ising model. For example, the Ising machine 12 causes the arithmetic circuit 58 to execute the search process on the first Ising model the number of times indicated by the number of times of execution contained in the execution start command. For example, the Ising machine 12 causes the arithmetic circuit 58 to repeatedly execute the search process on the first Ising model until the stop time contained in the execution start command arrives or until the execution time period contained in the execution start command elapses.

When this processing in the second example is executed, also, the information processing system 10 can improve the overall throughput of the system and shorten the time from acquisition of the combinatorial optimization problem until output of the solution.

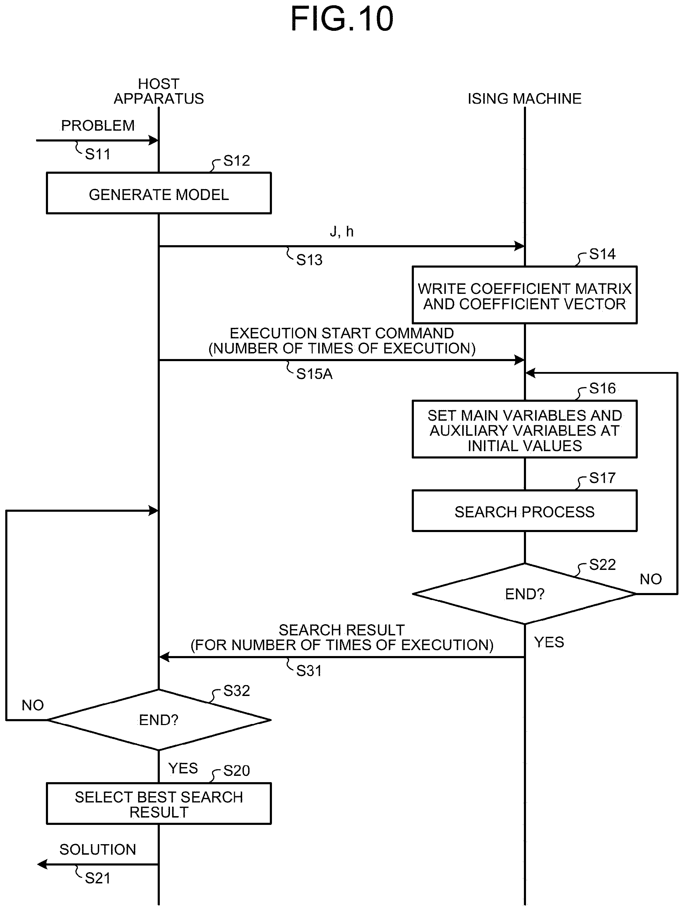

FIG. 10 is a sequence diagram illustrating a third example flow of the processing at the information processing system 10 according to the first embodiment. The information processing system 10 may execute the processing in accordance with the flow illustrated in FIG. 10, for example. Note that the processing flow illustrated in FIG. 10 is similar to the processing flow illustrated in FIG. 9. Thus, substantially the same processes are denoted by the same step numbers, and their detailed description is omitted.

In the third example, the information processing system 10 executes processes at S11, S12, S13, S14, S15A, S16, and S17 in a way similar to the flow illustrated in FIG. 9.

Subsequent to S17, the Ising machine 12 proceeds with the processing to S22. At S22, the Ising machine 12 determines whether an end condition is satisfied. If the end condition is not satisfied (No at S22), the Ising machine 12 returns the processing to S16 and executes a subsequent initial value setting process (S16) and search process (S17). If the end condition is satisfied (Yes at S22), the Ising machine 12 proceeds with the processing to S31.

At S31, the Ising machine 12 collectively transmits, to the host apparatus 14, search results obtained through multiple times of the search process.

Meanwhile, after transmitting the execution start command, the host apparatus 14 proceeds with the processing to S32. At S32, the host apparatus 14 determines whether search results are received. If receiving no search results (No at S32), the host apparatus 14 waits to receive search results. If receiving the search results from the Ising machine 12 (Yes at S32), the host apparatus 14 proceeds with the processing to S20.

At S20, the host apparatus 14 selects the best search result from the search results received for the first Ising machine. Then, at S21, the host apparatus 14 generates a solution of the combinatorial optimization problem on the basis of the selected best search result, and displays or transmits the generated solution to the user or the other apparatus.

The Ising machine 12 executing this processing in the third example collectively transmits the search results obtained by executing the multiple times of the search process, to the host apparatus 14.

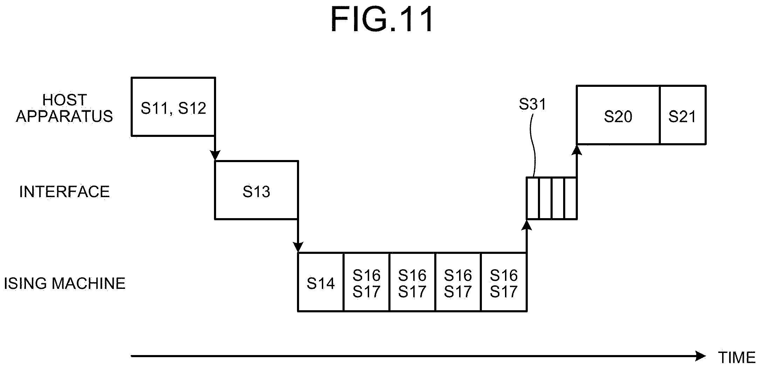

FIG. 11 is a timing diagram illustrating example processing time at each step when the processing is executed in accordance with the flow illustrated in FIG. 10.

When the processing is executed in accordance with the flow illustrated in FIG. 11, also, the information processing system 10 can improve the overall throughput of the system and shorten the time from acquisition of the combinatorial optimization problem until output of the solution. Moreover, when the processing is executed in accordance with the flow illustrated in FIG. 11, the information processing system 10 can reduce the number of times of communications between the host apparatus 14 and the Ising machine 12 for transmitting the search results.

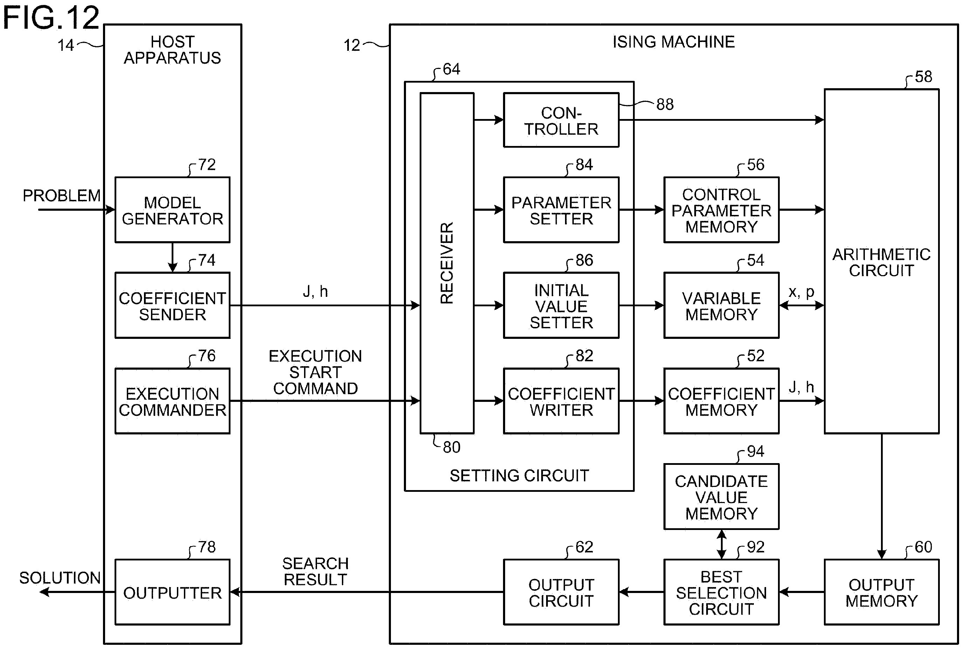

FIG. 12 is a diagram illustrating a functional configuration of a modification, in the Ising machine 12 and the host apparatus 14 according to the first embodiment. The Ising machine 12 may have a configuration illustrated in FIG. 12, for example. Note that the Ising machine 12 illustrated in FIG. 12 has a configuration similar to the configuration illustrated in FIG. 6. Thus, substantially the same constituents are denoted by the same reference signs, and their detailed description is omitted.

The Ising machine 12 further includes a best selection circuit 92 and a candidate value memory 94.

The best selection circuit 92 selects the best search result from search results obtained by executing times of the search process on the first Ising model by the arithmetic circuit 58. The candidate value memory 94 stores a candidate value of the best search result selected by the best selection circuit 92.

For example, at each output of the search result from the arithmetic circuit 58, the best selection circuit 92 compares the candidate value stored in the candidate value memory 94 with the search result output from the arithmetic circuit 58 and determines which is best. If determining that the search result output from the arithmetic circuit 58 is best, the best selection circuit 92 rewrites the candidate value stored in the candidate value memory 94 with the search result output from the arithmetic circuit 58. After the arithmetic circuit 58 outputs the search results for the first Ising model for a predetermined number of times, the best selection circuit 92 supplies the candidate value stored in the candidate value memory 94 as the best search result to the output circuit 62. Then, the output circuit 62 transmits the best search result received from the best selection circuit 92 to the host apparatus 14.

Alternatively, the candidate value memory 94 may store the value of an address of the output memory 60 where the candidate value of the best search result selected by the best selection circuit 92 is stored. In this case, the candidate value memory 94 may store a pair of the address value and an evaluation value for comparison for a better search result. The evaluation value is, for example, an energy value obtained by inputting N Ising spins to a predetermined function. In this case, at each acquisition of a new search result at the arithmetic circuit 58, the best selection circuit 92 may compare the evaluation value stored in the candidate value memory 94 with the evaluation value of the new search result. This enables the best selection circuit 92 to readily determine whether the new search result is better, in comparison with a previous search result.

Note that the best selection circuit 92 may select not only the best search result from the search results but also a predetermined number of higher-ranked search results from the search results. In this case, the output circuit 62 transmits the predetermined number of higher-ranked search results selected by the best selection circuit 92 to the host apparatus 14.

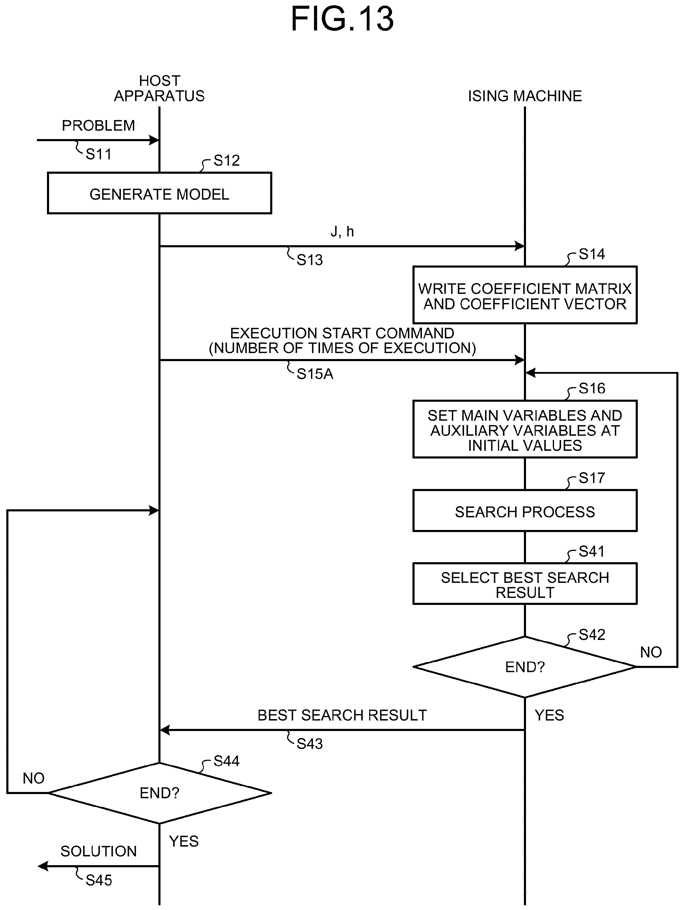

FIG. 13 is a sequence diagram illustrating a flow of processing at the information processing system 10 according to the modification illustrated in FIG. 12. The information processing system 10 of the modification illustrated in FIG. 12 executes the processing in accordance with the flow illustrated in FIG. 13, for example. Note that the processing flow illustrated in FIG. 13 is similar to the processing flow illustrated in FIG. 9. Thus, substantially the same processes are denoted by the same step numbers, and their detailed description is omitted.

The information processing system 10 of the modification illustrated in FIG. 12 executes processes at S11, S12, S13, S14, S15A, S16, and S17 in a way similar to the flow illustrated in FIG. 9.

Subsequent to S17, the Ising machine 12 proceeds with the processing to S41. At S41, the Ising machine 12 selects the best search result from one or more search results output by the current time for the first Ising model. For example, the Ising machine 12 selects the best search result using the best selection circuit 92 and the candidate value memory 94.

Then, at S42, the Ising machine 12 determines whether an end condition is satisfied. If the end condition is not satisfied (No at S42), the Ising machine 12 returns the processing to S16 and executes a subsequent initial value setting process (S16) and search process (S17). If the end condition is satisfied (Yes at S42), the Ising machine 12 proceeds with the processing to S43.

Note that the Ising machine 12 may perform the process to determine whether the end condition is satisfied at S42 in parallel with the best search result selection process at S41. In this case, if the end condition is not satisfied, the Ising machine 12 may return the processing to S16 before completing the best search result selection process at S41. This enables the Ising machine 12 to execute the initial value setting process (S16) and search process (S17) and the best search result selection process (S41) in parallel, which improves the throughput.

At S43, the Ising machine 12 transmits the last selected best search result to the host apparatus 14.

Meanwhile, after transmitting the execution start command, the host apparatus 14 proceeds with the processing to S44. At S44, the host apparatus 14 determines whether a best search result is received. If receiving no best search result (No at S44), the host apparatus 14 waits to receive a best search result. If receiving the best search result from the Ising machine 12 (Yes at S44), the host apparatus 14 proceeds with the processing to S45.

At S45, the host apparatus 14 generates a solution of the combinatorial optimization problem on the basis of the received best search result, and displays or transmits the generated solution to the user or the other apparatus.

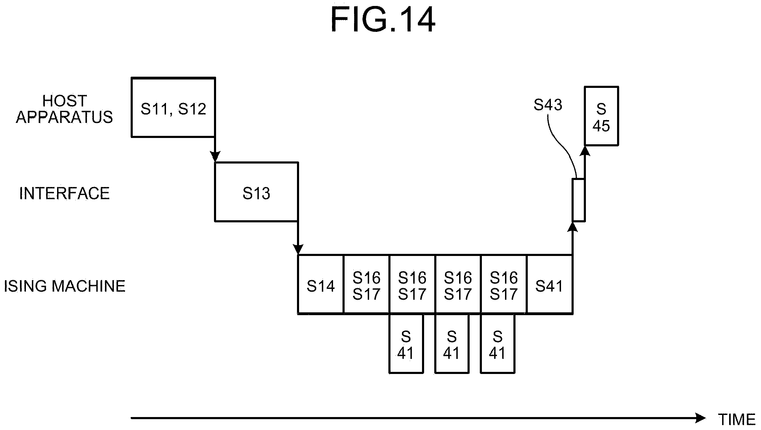

FIG. 14 is a timing diagram illustrating example processing time at each step when the processing is executed in accordance with the flow illustrated in FIG. 13.

The information processing system 10 of the modification executing the processing in accordance with the flow illustrated in FIG. 13 transmits only one search result from the Ising machine 12 to the host apparatus 14. This enables the information processing system 10 of the modification to shorten the time to transfer the search result and to improve the overall throughput of the system.

Second Embodiment

Next, an information processing system 10 of a second embodiment will be described. The information processing system 10 of the second embodiment has substantially the same functions and configuration as those of the information processing system 10 of the first embodiment described with reference to FIGS. 1 to 14. Thus, constituents having the same functions and configuration are denoted by the same reference signs, and their detailed description is omitted.

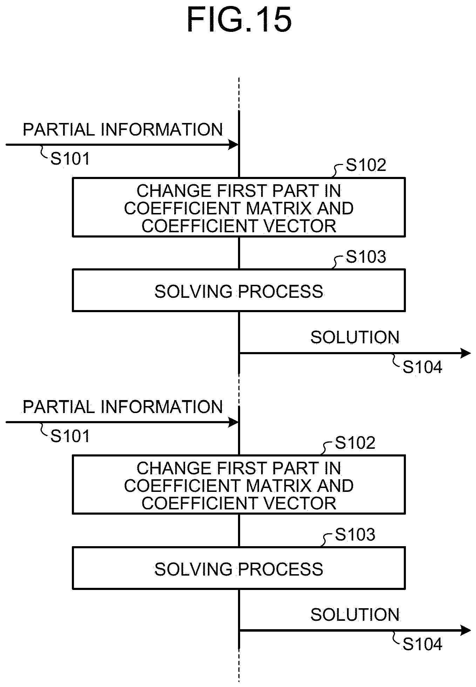

FIG. 15 is a sequence diagram illustrating a flow of processing at the information processing system 10 according to the second embodiment.

The information processing system 10 of the second embodiment repeatedly receives problem data containing information for defining a combinatorial optimization problem, from another apparatus. Then, at each reception of the problem data, the information processing system 10 generates a coefficient matrix and a coefficient vector defining an Ising model to be searched, executes a combinatorial optimization problem solving process using the generated coefficient matrix and coefficient vector, and outputs a solution obtained by executing the solving process. For example, the information processing system 10 may receive the problem data at irregular intervals or at predetermined time intervals.

Here, the information processing system 10 receives partial information being a base of a value of a first part being part of the coefficient matrix and coefficient vector. For example, the first part may be a row or a column in the coefficient matrix. Alternatively, the first part may be a submatrix being part of the coefficient matrix. Alternatively, the first part may be a value of a part included in the coefficient matrix or the coefficient vector.

If receiving the partial information (S101), the information processing system 10 changes the value of the first part, indicated by the partial information, in the already stored coefficient matrix and coefficient vector (S102). The information processing system 10 then executes the solving process on the basis of the changed coefficient matrix and coefficient vector (S 103) and outputs a solution obtained on the basis of the solving process (S104). Then, at each reception of the partial information, the information processing system 10 repeats the above processes from S 101 until S 104.

Note that, for example, after startup or reset, the information processing system 10 separately receives information being bases of all values in a coefficient matrix and a coefficient vector, and generates and stores the coefficient matrix and a submatrix. Alternatively, the information processing system 10 may repeatedly receive the problem data containing the partial information until all values in a coefficient matrix and a submatrix are generated, and may start the solving process after all values in the coefficient matrix and submatrix are generated.

This information processing system 10 of the second embodiment can be used in, for example, an application to detect a set of stocks being candidates for composition of a diversified portfolio from stock data. This application solves a combinatorial optimization problem called the maximum independent set problem expressing correlation among price movements of stocks as a graph. This application receives problem data including price movements of individual stocks in stock data and generates a problem. The price movements of each stock have an effect only on part of the coefficient matrix and coefficient vector defining the combinatorial optimization problem. Thus, the information processing system 10 of the second embodiment can be applied to such an application.

This information processing system 10 of the second embodiment can generate a new combinatorial optimization problem by changing only part of the coefficient matrix and coefficient vector. Thus, the information processing system 10 can reduce the volume of data communications in the system and the volume of writing on a memory and improve the throughput.

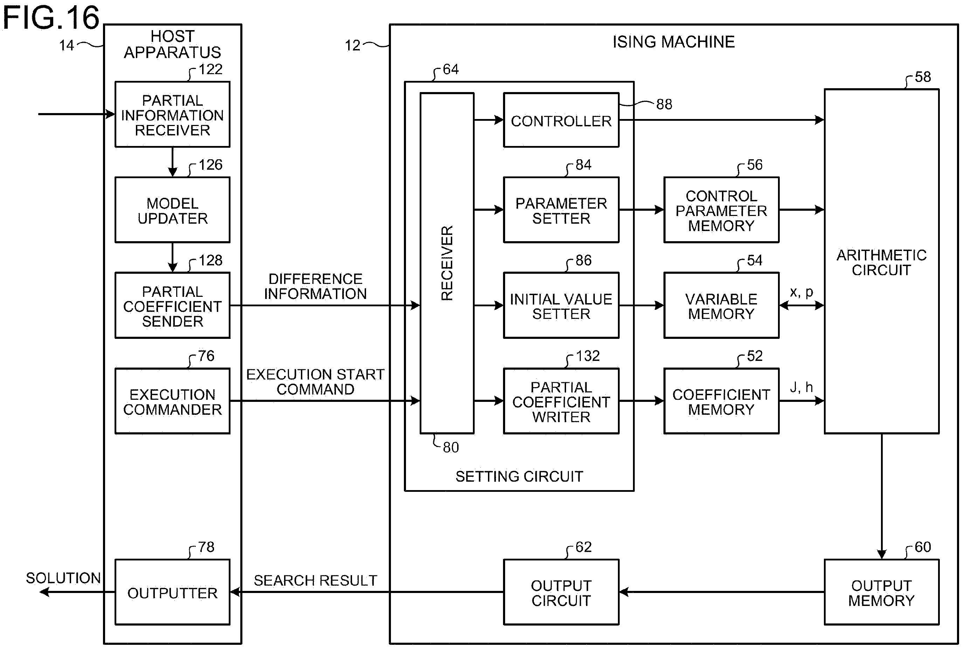

FIG. 16 is a diagram illustrating a functional configuration of the Ising machine 12 and the host apparatus 14 according to the second embodiment.

The host apparatus 14 includes a partial information receiver 122, a model updater 126, a partial coefficient sender 128, the execution commander 76, and the outputter 78.

The partial information receiver 122 receives the partial information transmitted from the other apparatus. The partial information is information being a base of a value of the first part being part of the coefficient matrix and coefficient vector. The partial information receiver 122 receives the partial information at irregular intervals or at predetermined time intervals.

The model updater 126 updates the coefficient matrix and coefficient vector at each reception of the partial information at the partial information receiver 122. In specific, the model updater 126 replaces the value of the first part in the coefficient matrix and coefficient vector defining the preceding Ising model to be searched with a value based on the partial information to generate a new coefficient matrix and coefficient vector.

The partial coefficient sender 128 generates difference information indicating an address and a value indicating the position of a different point between the coefficient matrix and coefficient vector defining the preceding Ising model to be searched and the new coefficient matrix and coefficient vector at each generation of the new coefficient matrix and coefficient vector at the model updater 126. Then, the partial coefficient sender 128 transmits the generated difference information to the Ising machine 12.

The setting circuit 64 of the Ising machine 12 functions as a partial coefficient writer 132 instead of the coefficient writer 82. The receiver 80 of the setting circuit 64 receives the difference information from the host apparatus 14. When the receiver 80 receives the difference information, the partial coefficient writer 132 rewrites the value of the address indicated by the received difference information in the coefficient matrix and coefficient vector stored in the coefficient memory 52, with the value indicated by the difference information.

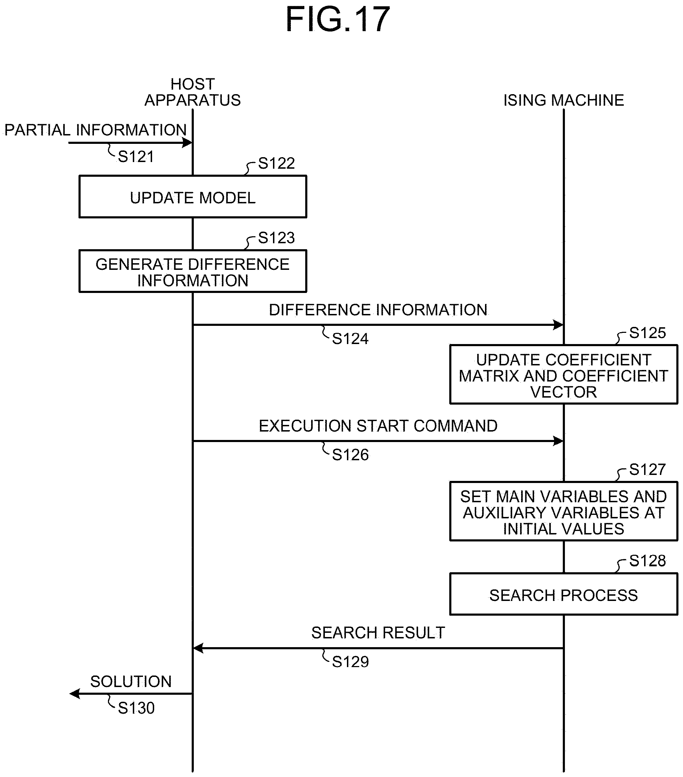

FIG. 17 is a sequence diagram illustrating a flow of processing at the information processing system 10 according to the second embodiment. The information processing system 10 executes processing in accordance with the flow illustrated in FIG. 17, for example.

At S121, the host apparatus 14 receives partial information from another apparatus.

Then, at S122, the host apparatus 14 updates the coefficient matrix and coefficient vector on the basis of the received partial information. In specific, the host apparatus 14 replaces the value of the first part in the coefficient matrix and coefficient vector defining the preceding Ising model to be searched with a value based on the partial information to generate a new coefficient matrix and coefficient vector.

Then, at S123, the host apparatus 14 generates difference information indicating an address and a value for a different point between the coefficient matrix and coefficient vector defining the preceding Ising model to be searched and the new coefficient matrix and coefficient vector. Then, at S124, the host apparatus 14 transmits the generated difference information to the Ising machine 12.

Then, at S125, the Ising machine 12 receives the difference information from the host apparatus 14 and updates the coefficient matrix and coefficient vector stored in the coefficient memory 52. In specific, the host apparatus 14 rewrites the value of the address indicated by the received difference information in the coefficient matrix and coefficient vector stored in the coefficient memory 52, with the value indicated by the difference information.

Then, at S126, the host apparatus 14 transmits an execution start command to the Ising machine 12. Note that the host apparatus 14 may transmit the execution start command together with the difference information.

Then, at S127, the Ising machine 12 sets at least one of a set of N main variables ($x_1$, $x_2$, $x_3$, ...) and a set of N auxiliary variables ($p_1$, $p_2$, $p_3$, ...) as a set of N initial values in response to reception of the execution start command. The set of the N initial values differs depending on the search process.

Then, at S128, the Ising machine 12 executes the search process illustrated in FIG. 4. If the search process ends, the Ising machine 12 transmits the search result to the host apparatus 14 at S129.

Then, at S130, the host apparatus 14 generates a solution of the combinatorial optimization problem on the basis of the received search result. The host apparatus 14 then transmits the generated solution to the other apparatus.

Note that the information processing system 10 of the second embodiment executes the search process on the Ising model to be searched once but may execute the search process multiple times on the Ising model in accordance with the other flows described in the first embodiment.

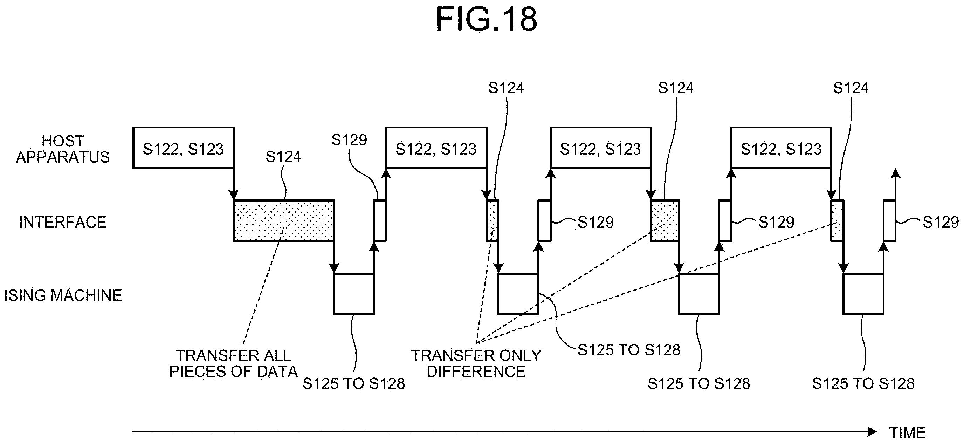

FIG. 18 is a timing diagram illustrating example processing time at each step when the processing is executed in accordance with the flow illustrated in FIG. 17.

The information processing system 10 of the second embodiment transfers all pieces of data of the coefficient matrix and coefficient vector defining the Ising model from the host apparatus 14 to the Ising machine 12, for example, at the transfer process (S124) after startup or reset. However, at the second and subsequent transfer processes (S124), the information processing system 10 of the second embodiment transfers only a difference from the coefficient matrix and coefficient vector defining the preceding Ising model to be searched, from the host apparatus 14 to the Ising machine 12.

When a combinatorial optimization problem of significantly large size is solved, the coefficient matrix and coefficient vector of large size lengthen the process (S124) to transfer the coefficient matrix and coefficient vector. However, the information processing system 10 of the second embodiment can shorten the second and subsequent transfer processes (S124) and can thus shorten the time from acquisition of the partial information until output of a solution at the second and subsequent solving processes.

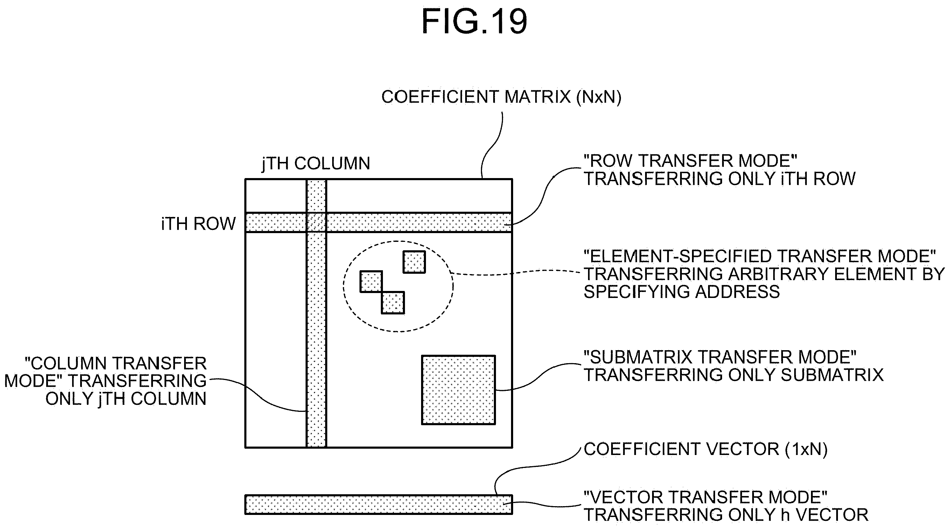

FIG. 19 is a diagram illustrating example data to be transmitted in the information processing system 10 according to the second embodiment.

The host apparatus 14 may set part of the coefficient matrix and coefficient vector, to be transmitted to the Ising machine 12 in accordance with the address of a different point between the coefficient matrix and coefficient vector defining the preceding Ising model to be searched and a new coefficient matrix and coefficient vector and the number of the different points.

For example, the host apparatus 14 may set a value contained in the difference information in any of a row transfer mode, a column transfer mode, a submatrix transfer mode, an element-specified transfer mode, and a vector transfer mode.

In the row transfer mode, the difference information contains the address of a row including a different point in the coefficient matrix and coefficient vector and a plurality of values included in that row. This enables the Ising machine 12 to efficiently rewrite the coefficient matrix in row units.

In the column transfer mode, the difference information contains the address of a column including a different point in the coefficient matrix and coefficient vector and a plurality of values included in that column. This enables the Ising machine 12 to efficiently rewrite the coefficient matrix in column units.

In the submatrix transfer mode, the difference information contains the address of a submatrix including a different point in the coefficient matrix and coefficient vector and a plurality of values included in that submatrix. This enables the Ising machine 12 to efficiently rewrite a continuous partial range in the coefficient matrix.

In the element-specified transfer mode, the difference information contains the address and value of an element of a different point in the coefficient matrix and coefficient vector. This enables the host apparatus 14 to efficiently transmit only a different value to the Ising machine 12.

In the vector transfer mode, the difference information contains a plurality of values included in the coefficient vector. This enables the host apparatus 14 to transmit only the coefficient vector to the Ising machine 12. Moreover, the Ising machine 12 can efficiently rewrite only the coefficient vector.

While certain embodiments have been described, these embodiments have been presented by way of example only, and are not intended to limit the scope of the inventions. Indeed, the novel embodiments described herein may be embodied in a variety of other forms; moreover, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. An information processing system (10) solving a combinatorial optimization problem, the information processing system (10) comprising:

    an Ising machine (12) being hardware configured to execute a search process searching for a ground state of an Ising model representing the combinatorial optimization problem; and
    a host apparatus (14) being hardware connected to the Ising machine (12) via an interface, the host apparatus being configured to control the Ising machine, wherein
    the Ising machine (12) includes:

        a coefficient memory (52) configured to store a coefficient matrix and a coefficient vector defining the Ising model;
        a variable memory (54) configured to store a main variable and an auxiliary variable corresponding to each of Ising spins contained in the Ising model;

an arithmetic circuit (58) configured to alternately repeat, in the search process, execution of an auxiliary variable update process and a main variable update process for each of the Ising spins, the auxiliary variable update process updating the auxiliary variable with the main variable, the main variable update process updating the main variable with the auxiliary variable;

an output circuit (62) configured to transmit a value based on the main variable to the host apparatus as a search result, the main variable corresponding to each of the Ising spins after execution of the search process; and

a setting circuit (64) configured to

write the coefficient matrix and the coefficient vector on the coefficient memory, and
cause the arithmetic circuit to start the search process in response to reception of an execution start command of the search process from the host apparatus,

the host apparatus (14) is configured to:

receive the search result from the Ising machine after the search process; and
output a solution of the combinatorial optimization problem on the basis of the received search result, and

the coefficient memory (52) is configured to continue storing a preceding coefficient matrix and a preceding coefficient vector until a new coefficient matrix and a new coefficient vector are written by the setting circuit.

2.  The information processing system according to claim 1, wherein

the setting circuit (64) is configured to cause the arithmetic circuit to execute the search process multiple times on a first Ising model being the Ising model, and
the host apparatus (14) is configured to transmit once the coefficient matrix and the coefficient vector defining the first Ising model to the Ising machine prior to execution of the multiple times of the search process.

3.  The information processing system according to claim 2, wherein the setting circuit (64) is configured:

to receive the coefficient matrix and the coefficient vector defining the first Ising model from the host apparatus prior to execution of the multiple times of the search process;
to write the received coefficient matrix and coefficient vector on the coefficient memory; and
not to update the coefficient matrix and the coefficient vector written on the coefficient memory until the multiple times of the search process ends.

4.  The information processing system according to claim 3, wherein the setting circuit (64) is configured, before start of execution of each of the multiple times of the search process, to set a set of the main variables and/or a set of the auxiliary variables for the Ising spins as a set of initial values different between the multiple times of the search process.

5.  The information processing system according to claim 4, wherein the setting circuit (64) is configured to:

store an initial value table in which patterns of a set of the initial values for the set of the main variables and/or the set of the auxiliary variables are written; and,
before start of execution of each of the multiple times of the search process, set the set of the main variables and/or the set of the auxiliary variables for the Ising spins as a set of the initial values based on any of the patterns written in the initial value table.

6.  The information processing system according to claim 3, wherein the setting circuit (64) is configured, before start of execution of each of the multiple times of the search process, to set the set of the main variables and/or the set of the auxiliary variables for the Ising spins as a set of initial values based on random numbers for each of the multiple times of the search process.

7.  The information processing system according to claim 3, wherein

the host apparatus (14) is configured to transmit, multiple times to the Ising machine, the execution start command commanding the search process on the first Ising model, and
the setting circuit (64) is configured to cause the arithmetic circuit to execute the search process on the first Ising model at each reception of the execution start command.

8. The information processing system according to claim 3, wherein

the host apparatus (14) is configured to transmit, once to the Ising machine, the execution start command commanding the search process on the first Ising model, and
the setting circuit (64) is configured, upon reception of the execution start command, to cause the arithmetic circuit to execute the multiple times of the search process on the first Ising model.

9. The information processing system according to claim 8, wherein

the host apparatus (14) is configured to transmit, once to the Ising machine, the execution start command containing a number of times of execution, and
the setting circuit (64) is configured, upon reception of the execution start command, to cause the arithmetic circuit to execute the search process on the first Ising model a number of times indicated by the number of times of execution.

10. The information processing system according to claim 9, wherein

the host apparatus (14) is configured to transmit, once to the Ising machine, the execution start command containing stop time or an execution time period, and
the setting circuit (64) is configured, upon reception of the execution start command, to cause the arithmetic circuit to repeatedly execute the search process until the stop time arrives or until the execution time period elapses.

11. The information processing system according to claim 3, wherein the output circuit is configured to collectively transmit, to the host apparatus, the search results obtained by executing the multiple times of the search process.

12. The information processing system according to claim 3, wherein

the Ising machine (12) further includes a best selection circuit (92) configured to select a best search result from the search results obtained by executing the multiple times of the search process, and
the output circuit (62) is configured to transmit the best search result selected by the best selection circuit to the host apparatus.

13. The information processing system according to claim 1, wherein

the host apparatus (14) is configured to:

receive partial information being a base of a value of a first part being part of the coefficient matrix and the coefficient vector;
generate a new coefficient matrix and a new coefficient vector by replacing, with a value based on the partial information, a value of the first part in the coefficient matrix and the coefficient vector defining a preceding Ising model to be searched;
generate difference information indicating an address and a value indicating a position of a different point between

the coefficient matrix and the coefficient vector defining the preceding Ising model to be searched and being stored in the coefficient memory, and
the new coefficient matrix and the new coefficient vector; and

transmit the difference information to the Ising machine, and

the setting circuit (64) is configured to rewrite a value of the address indicated by the difference information in the coefficient matrix and the coefficient vector stored in the coefficient memory, with the value indicated by the difference information upon reception of the difference information.

**14.** The information processing system according to claim 13, wherein the difference information contains at least one of

an address of a row and a plurality of values included in the row, the row including the different point in the coefficient matrix and the coefficient vector,

an address of a column and a plurality of values included in the column, the column including the different point in the coefficient matrix and the coefficient vector,

an address of a submatrix and a plurality of values included in the submatrix, the submatrix including the different point in the coefficient matrix and the coefficient vector,

an address and a value of an element of the different point in the coefficient matrix and the coefficient vector, and

a plurality of values included in the coefficient vector.

# FIG.1

10

# FIG.2

# FIG.3

# FIG.4

```
        ┌──────────────┐
        │    START     │
        └──────────────┘
               │
               ▼
   ┌───────────────────────────┐
   │  SETTING (K, D, p(t), α(t))│  ～S111
   └───────────────────────────┘
               │
               ▼
   ┌───────────────────────────┐
   │           LOOP            │  ～S112
   └───────────────────────────┘
               │
               ▼
   ┌───────────────────────────┐
   │          i=1 TO N         │  ～S113
   └───────────────────────────┘
               │
               ▼
   ┌───────────────────────────┐
   │  AUXILIARY VARIABLE UPDATE │  ～S114
   │          PROCESS          │
   └───────────────────────────┘
               │
               ▼
   ┌───────────────────────────┐
   │          i=1 TO N         │  ～S115
   └───────────────────────────┘
               │
               ▼
   ┌───────────────────────────┐
   │          i=1 TO N         │  ～S116
   └───────────────────────────┘
               │
               ▼
   ┌───────────────────────────┐
   │    MAIN VARIABLE UPDATE    │  ～S117
   │          PROCESS          │
   └───────────────────────────┘
               │
               ▼
   ┌───────────────────────────┐
   │          i=1 TO N         │  ～S118
   └───────────────────────────┘
               │
               ▼
   ┌───────────────────────────┐
   │   REPEAT PREDETERMINED     │  ～S119
   │      NUMBER OF TIMES       │
   └───────────────────────────┘
               │
               ▼
        ┌──────────────┐
        │     END      │
        └──────────────┘
```

# FIG.5

EP 4 300 380 A1

FIG.6

# FIG.7

HOST APPARATUS

ISING MACHINE

PROBLEM
S11

S12
GENERATE MODEL

J, h
S13

S14
WRITE COEFFICIENT MATRIX AND COEFFICIENT VECTOR

EXECUTION START COMMAND
S15

S16
SET MAIN VARIABLES AND AUXILIARY VARIABLES AT INITIAL VALUES

S17
SEARCH PROCESS

SEARCH RESULT
S18

NO
S19
END?

YES
S20
SELECT BEST SEARCH RESULT

SOLUTION
S21

# FIG.8

EP 4 300 380 A1

# FIG.9

HOST
APPARATUS

ISING MACHINE

PROBLEM
S11

S12
GENERATE MODEL

J, h
S13

S14
WRITE COEFFICIENT MATRIX
AND COEFFICIENT VECTOR

EXECUTION START COMMAND
(NUMBER OF TIMES OF EXECUTION)
S15A

S16
SET MAIN VARIABLES AND
AUXILIARY VARIABLES AT
INITIAL VALUES

S17
SEARCH PROCESS

SEARCH RESULT
S18

NO    S23
END?

S22    NO
END?

YES    S20
SELECT BEST SEARCH
RESULT

YES

SOLUTION
S21

# FIG.10

HOST
APPARATUS                                            ISING MACHINE

PROBLEM
⌐S11

┌─────────────────────────────┐ ⌐S12
│      GENERATE MODEL          │
└─────────────────────────────┘

                    J, h
─────────────────────────────────────→
              ⌐S13
                              ┌─────────────────────────────┐ ⌐S14
                              │ WRITE COEFFICIENT MATRIX    │
                              │ AND COEFFICIENT VECTOR      │
                              └─────────────────────────────┘

        EXECUTION START COMMAND
      (NUMBER OF TIMES OF EXECUTION)
─────────────────────────────────────→
              ⌐S15A
                              ┌─────────────────────────────┐ ⌐S16
                              │ SET MAIN VARIABLES AND      │
                              │ AUXILIARY VARIABLES AT      │
                              │ INITIAL VALUES              │
                              └─────────────────────────────┘

                              ┌─────────────────────────────┐ ⌐S17
                              │      SEARCH PROCESS          │
                              └─────────────────────────────┘

                                          ⌐S22
                                                          NO
                                   ◇ END? ◇
                                          YES

              SEARCH RESULT
    (FOR NUMBER OF TIMES OF EXECUTION)
←─────────────────────────────────────
              ⌐S31

                    ⌐S32
NO
        ◇ END? ◇

         YES  ⌐S20
┌─────────────────────────────┐
│ SELECT BEST SEARCH          │
│ RESULT                      │
└─────────────────────────────┘

SOLUTION
←
⌐S21

# FIG.11

# FIG.12

# FIG.13

HOST
APPARATUS                                                    ISING MACHINE

PROBLEM

S11

S12

GENERATE MODEL

J, h

S13

S14

WRITE COEFFICIENT MATRIX
AND COEFFICIENT VECTOR

EXECUTION START COMMAND
(NUMBER OF TIMES OF EXECUTION)

S15A

S16

SET MAIN VARIABLES AND
AUXILIARY VARIABLES AT
INITIAL VALUES

S17

SEARCH PROCESS

S41

SELECT BEST SEARCH
RESULT

S42                    NO

END?

BEST SEARCH RESULT          YES

S43

S44

NO

END?

SOLUTION          YES

S45

# FIG.14

HOST APPARATUS: S11, S12

INTERFACE: S13

ISING MACHINE: S14 | S16 S17 | S16 S17 | S16 S17 | S16 S17 | S41

S41 | S41 | S41

S43 | S45

TIME

# FIG.15

PARTIAL INFORMATION
S101

S102

CHANGE FIRST PART IN
COEFFICIENT MATRIX AND
COEFFICIENT VECTOR

S103

SOLVING PROCESS

SOLUTION
S104

PARTIAL INFORMATION
S101

S102

CHANGE FIRST PART IN
COEFFICIENT MATRIX AND
COEFFICIENT VECTOR

S103

SOLVING PROCESS

SOLUTION
S104

## FIG.16

Figure 16 is a block diagram showing a host apparatus (14) and an Ising machine (12).

**ISING MACHINE (12)** includes:
- ARITHMETIC CIRCUIT (58)
- CONTROL PARAMETER MEMORY (56)
- VARIABLE MEMORY (54) — x, p
- COEFFICIENT MEMORY (52) — J, h
- OUTPUT MEMORY (60)
- OUTPUT CIRCUIT (62)
- SETTING CIRCUIT (64) containing:
  - CONTROLLER (88)
  - PARAMETER SETTER (84)
  - INITIAL VALUE SETTER (86)
  - PARTIAL COEFFICIENT WRITER (132)
  - RECEIVER (80)

**HOST APPARATUS (14)** includes:
- PARTIAL INFORMATION RECEIVER (122)
- MODEL UPDATER (126)
- PARTIAL COEFFICIENT SENDER (128)
- EXECUTION COMMANDER (76)
- OUTPUTTER (78)

Signals: DIFFERENCE INFORMATION, EXECUTION START COMMAND, SEARCH RESULT, SOLUTION.

# FIG.17

HOST
APPARATUS

ISING MACHINE

PARTIAL INFORMATION
⎰S121

S122

UPDATE MODEL

S123

GENERATE DIFFERENCE
INFORMATION

DIFFERENCE INFORMATION
⎰S124

S125

UPDATE COEFFICIENT
MATRIX AND COEFFICIENT
VECTOR

EXECUTION START COMMAND
⎰S126

S127

SET MAIN VARIABLES AND
AUXILIARY VARIABLES AT
INITIAL VALUES

S128

SEARCH PROCESS

SEARCH RESULT
⎰S129

SOLUTION
⎰S130

# FIG.18

EP 4 300 380 A1

# FIG.19

COEFFICIENT MATRIX (NxN)

jTH COLUMN

iTH ROW

"ROW TRANSFER MODE"
TRANSFERRING ONLY iTH ROW

"ELEMENT-SPECIFIED TRANSFER MODE"
TRANSFERRING ARBITRARY ELEMENT BY
SPECIFYING ADDRESS

"COLUMN TRANSFER
MODE" TRANSFERRING
ONLY jTH COLUMN

"SUBMATRIX TRANSFER MODE"
TRANSFERRING ONLY SUBMATRIX

COEFFICIENT VECTOR (1xN)

"VECTOR TRANSFER MODE"
TRANSFERRING ONLY h VECTOR

EP 4 300 380 A1

Europäisches
Patentamt

European
Patent Office

Office européen
des brevets

# EUROPEAN SEARCH REPORT

**Application Number**

EP 23 15 8815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATSUMOTO NASA ET AL: "Distance-based clustering using QUBO formulations", SCIENTIFIC REPORTS, [Online] vol. 12, no. 1, 17 February 2022 (2022-02-17), XP093097100, DOI: 10.1038/s41598-022-06559-z Retrieved from the Internet: URL:https://www.nature.com/articles/s41598-022-06559-z> [retrieved on 2023-11-01] * abstract * * page 2 - page 8 * | 1-14 | INV. G06N10/60 |
| L | GOTO HAYATO ET AL: "High-performance combinatorial optimization based on classical mechanics", SCIENCE ADVANCES, vol. 7, no. 6, 3 February 2021 (2021-02-03), XP093097563, DOI: 10.1126/sciadv.abe7953 * abstract * * page 2 - page 4 * * page 7 - page 8 * * page 12 - page 13 * * page 15 - page 17 * * page 19 - page 42 * | 1-14 | **TECHNICAL FIELDS SEARCHED (IPC)**<br><br>G06N |
| A | TAMURA KENSUKE ET AL: "Performance Comparison of Typical Binary-Integer Encodings in an Ising Machine", IEEE ACCESS, IEEE, USA, vol. 9, 19 May 2021 (2021-05-19), pages 81032-81039, XP011859511, DOI: 10.1109/ACCESS.2021.3081685 [retrieved on 2021-06-07] * the whole document * | 1-14 | |

The present search report has been drawn up for all claims

| Place of search | Date of completion of the search | Examiner |
|---|---|---|
| The Hague | 2 November 2023 | Tsakonas, Athanasios |

EPO FORM 1503 03.82 (P04C01)